# EUROPEAN PATENT APPLICATION

(11) **EP 1 489 449 A1**
(43) Date of publication of application: **22.12.2004**
(21) Application number: 03253906.6
(22) Date of filing: 20.06.2003
(51) Int. Cl.: G02B 26/08

(54) **Spatial light modulator**

(71) Applicant: ASML Netherlands B.V., 5504 DR Veldhoven (NL)
(72) Inventor: The designation of the inventor has not yet been filed
(74) Representative: Leeming, John Gerard

(57) **Abstract**

Each pixel of a spatial light modulator comprises a light modulating element, a light sensitive element and control circuitry to set the light modulating element to a state determined by a signal received by the light sensitive element.

## Description

The present invention relates to a spatial light modulator and a method of spatially modulating a radiation beam such as may be used in lithographic projection apparatus comprising:
- a radiation system for supplying a projection beam of radiation;
- programmable patterning means for patterning the projection beam according to a desired pattern;
- a substrate table for holding a substrate; and
- a projection system for projecting the patterned beam onto a target portion of the substrate.

Lithographic projection apparatus are used in the manufacture of integrated circuits (ICs), flat panel displays and other devices involving fine structures. The programmable patterning means generates a pattern corresponding to an individual layer of, for example, the IC, and this pattern is imaged onto a target portion (*e.g.* comprising part of, one or several dies) on a substrate (*e.g.* silicon wafer or glass plate) that has been coated with a layer of radiation-sensitive material (resist).

Prior to this imaging step, the substrate may undergo various procedures, such as priming, resist coating and a soft bake. After exposure, the substrate may be subjected to other procedures, such as a post-exposure bake (PEB), development, a hard bake and measurement/inspection of the imaged features. These transfer procedures result in a patterned layer of resist on the substrate. One or more pattern steps, such as deposition, etching, ion-implantation (doping), metallization, oxidation, chemo-mechanical polishing, etc., follow, each of which is intended to finish, create or modify a layer of the device. If several layers are required, then the whole procedure, or a variant thereof, is repeated for each new layer. Eventually, an array of devices will be present on the substrate (wafer). These devices are then separated from one another by a technique such as dicing or sawing, whence the individual devices can be mounted on a carrier, connected to pins, etc.. Further information regarding such processes can be obtained, for example, from the book "Microchip Fabrication: A Practical Guide to Semiconductor Processing", Third Edition, by Peter van Zant, McGraw Hill Publishing Co., 1997, ISBN 0-07-067250-4, incorporated herein by reference.

A significant problem in a lithographic apparatus using a programmable patterning means is uploading the data necessary to set the pixels of the programmable patterning means. To achieve throughputs and resolutions comparable with mask-based lithographic apparatus requires data transfer rates of 80 terabits per second or more. A typical programmable patterning means may have pixels of about 8µm x 8µm and about 1000 x 4000 pixels. Multiple communication lines need to be operated in parallel to achieve the data rate required. Switching rates will be high and thus there is a large heat dissipation in a small device. Also, the necessary addressing circuitry is complex and difficult to fit in a small space.

Therefore, it is an object of the invention to provide a spatial light modulator to which pattern data can be uploaded without requiring complex addressing circuitry and with reduced heat dissipation.

According to the present invention there is provided a spatial light modulator comprising an array of pixels disposed on a substrate, each pixel comprising:
a light modulating element for modulating an incident radiation beam of a first wavelength;
a light sensitive element for receiving a programming beam of a second wavelength;
control circuitry for setting the light modulating element according to the signal received by said light sensitive element.

The light receiving means provided for each pixel of the spatial light modulator allows the pattern data to be uploaded optically rather that electronically, avoiding the need to provide complex addressing circuitry and reducing the heat dissipation in the spatial light modulator. A programming beam can be modulated at the required data transfer rates using known techniques and without dissipating substantial amounts of heat at the spatial light modulator.

In some preferred embodiments of the invention, the light modulating element and light sensitive element of each pixel are disposed on the same side of the substrate. This simplifies manufacture of the spatial light modulator and enables it to be made with conventional manufacturing techniques, e.g. lithography. In such an embodiment, the light modulating element can be disposed over said light sensitive element and arranged to be substantially transparent to radiation of said second wavelength so that the pixels can be programmed through the light modulating elements. Alternatively, the substrate can be chosen to be substantially transparent to radiation of said second wavelength. For example, the light modulating element and/or the substrate can be made of silicon and the programming beam may be of infra-red radiation.

In other preferred embodiments, the light modulating element and light sensitive element of each pixel are disposed on opposite sides of said substrate. Such an arrangement enables the light sensitive element to be larger in size and also makes it easier to direct the programming beam onto the array since the optical arrangements for doing that are not constrained by the need not to obscure the radiation beam.

Preferably, the spatial light modulator further comprises beam scanning means for scanning at least one programming beam across said array of pixels. Where the array of pixels is a two dimensional array having a plurality of rows and a plurality of columns the beam scanning means can be adapted to scan a plurality of programming beams equal in number to said plurality of columns along respective ones of said columns. In this way a whole row of pixels can be programmed in parallel, massively reducing the time taken to program the array.

The beam scanning means can conveniently comprise a prism having reflective surfaces and disposed with its axis perpendicular to said columns and means for rotating said prism about said axis. The rotation of such a prism can easily be synchronized to the pulses of the projection beam and to the data-modulated programming beams. The light sensitive element in a preferred embodiment comprises a photodiode and said control circuitry comprises a capacitor connected to said photodiode so as to be charged by current generated in said photodiode by said programming beam when incident thereon. This provides a simple arrangement that can easily be accommodated in the substrate around the modulating element. The intensity and size of the programming beam and the duration for which it is incident on the light sensitive element can therefore be used to control the amount of charge accumulated by the capacitor and hence the state adopted by the modulating element. An amplifier for amplifying the current generated in said photodiode can be provided to allow rapid programming without a high intensity programming beam.

The light modulating element comprises a deformable mirror in a preferred embodiment of the invention.

The invention also provides a method of spatially modulating a radiation beam according to a pattern using a spatial light modulator comprising an array of pixels disposed on a substrate, each pixel comprising:
a light modulating element for modulating an incident radiation beam of a first wavelength;
a light sensitive element for receiving a programming beam of a second wavelength;
control circuitry for setting the light modulating element according to the signal received by said light sensitive element;
said method comprising the steps of:
   modulating at least one programming beam according to said pattern;
   scanning the or each programming beam across said array in synchronism with the modulation of the or each beam so as to irradiate each light sensitive element and thereby set the state of the corresponding light modulating element; and
   directing a radiation beam onto said spatial light modulator so as to be modulated according to the states of said light modulation elements.

The present invention is particularly applicable when the radiation beam is pulsed in which case said steps of modulating and scanning are carried out between pulses of said radiation beam.

Further, the present invention provides a lithographic projection apparatus comprising:
- a radiation system for providing a projection beam of radiation;
- programmable patterning means for patterning the projection beam according to a desired pattern;
- a substrate table for holding a substrate;
- a projection system for projecting the patterned beam onto a target portion of the substrate,
characterized in that said programmable patterning means comprises a spatial light modulator as described above.

Yet further, the present invention provides a device manufacturing method comprising the steps of:
- providing a substrate that is at least partially covered by a layer of radiation sensitive material;
- providing a projection beam of radiation using a radiation system;
- patterning the projection beam using a method as described above;
- projecting the patterned beam of radiation onto a target portion of the layer of radiation-sensitive material.

The term "programmable patterning means" as here employed should be broadly interpreted as referring to any means that can be used to endow an incoming radiation beam with a patterned cross-section, so that a desired pattern can be created in a target portion of the substrate; the terms "light valve" and "Spatial Light Modulator" (SLM) can also be used in this context. Examples of such patterning means include:
- A programmable mirror array. This may comprise a matrix-addressable surface having a viscoelastic control layer and a reflective surface. The basic principle behind such an apparatus is that (for example) addressed areas of the reflective surface reflect incident light as diffracted light, whereas unaddressed areas reflect incident light as undiffracted light. Using an appropriate spatial filter, the said undiffracted light can be filtered out of the reflected beam, leaving only the diffracted light to reach the substrate; in this manner, the beam becomes patterned according to the addressing pattern of the matrix-addressable surface. An array of grating light valves (GLV) can also be used in a corresponding manner. Each GLV is comprised of a plurality of reflective ribbons that can be deformed relative to one another to form a grating that reflects incident light as diffracted light. A further alternative embodiment of a programmable mirror array employs a matrix arrangement of tiny mirrors, each of which can be individually tilted about an axis by applying a suitable localized electric field, or by employing piezoelectric actuation means. Once again, the mirrors are matrix-addressable, such that addressed mirrors will reflect an incoming radiation beam in a different direction to unaddressed mirrors; in this manner, the reflected beam is patterned according to the addressing pattern of the matrix-addressable mirrors. The required matrix addressing can be performed using suitable electronic means. In both of the situations described hereabove, the programmable patterning means can comprise one or more programmable mirror arrays. More information on mirror arrays as here referred to can be gleaned, for example, from United States Patents US 5,296,891 and US 5,523,193, and PCT patent applications WO 98/38597 and WO 98/33096, which are incorporated herein by reference.
- A programmable LCD array. An example of such a construction is given in United States Patent US 5,229,872, which is incorporated herein by reference.

It should be appreciated that where pre-biasing of features, optical proximity correction features, phase variation techniques and multiple exposure techniques are used, the pattern "displayed" on the programmable patterning means may differ substantially from the pattern eventually transferred to a layer of or on the substrate.

For the sake of simplicity, the projection system may be referred to as the "lens"; however, this term should be broadly interpreted as encompassing various types of projection system, including refractive optics, reflective optics, catadioptric systems and micro lens arrays, for example. It is to be understood that the term "projection system" as used in this application simply refers to any system for transferring the patterned beam from the programmable patterning means to the substrate. The radiation system may also include components operating according to any of these design types for directing, shaping or controlling the projection beam of radiation, and such components may also be referred to below, collectively or singularly, as a "lens". It has been proposed to fill a space between the final element of the projection system and the substrate with a liquid that has a refractive index of greater than one. This enables imaging of smaller features because the exposure radiation will have a shorter wavelength in liquid. The present invention may be used with apparatus of this type. Further, the lithographic apparatus may be of a type having two or more substrate tables (and/or two or more mask tables). In such "multiple stage" devices the additional tables may be used in parallel, or preparatory steps may be carried out on one or more tables while one or more other tables are being used for exposures. Dual stage lithographic apparatus are described, for example, in US 5,969,441 and WO 98/40791, incorporated herein by reference.

Although specific reference may be made in this text to the use of the apparatus according to the invention in the manufacture of ICs, it should be explicitly understood that such an apparatus has many other possible applications. For example, it may be employed in the manufacture of integrated optical systems, guidance and detection patterns for magnetic domain memories, liquid-crystal display panels, thin-film magnetic heads, thin film transistor liquid crystal displays, printed circuit boards (PCBs), etc.

In the present document, the terms "radiation" and "beam" are used to encompass all types of electromagnetic radiation, including ultraviolet radiation (*e.g.* with a wavelength of 365, 248, 193, 157 or 126 nm) and EUV (extreme ultra-violet radiation, *e.g.* having a wavelength in the range 5-20 nm), as well as particle beams, such as ion beams or electron beams.

Exemplary embodiments of the invention will now be described, by way of example only, with reference to the accompanying schematic drawings, in which:
Figure 1 depicts a lithographic projection apparatus according to an embodiment of the invention;
Figure 2 depicts an element of a spatial light modulator of the first embodiment of the invention in the programming phase;

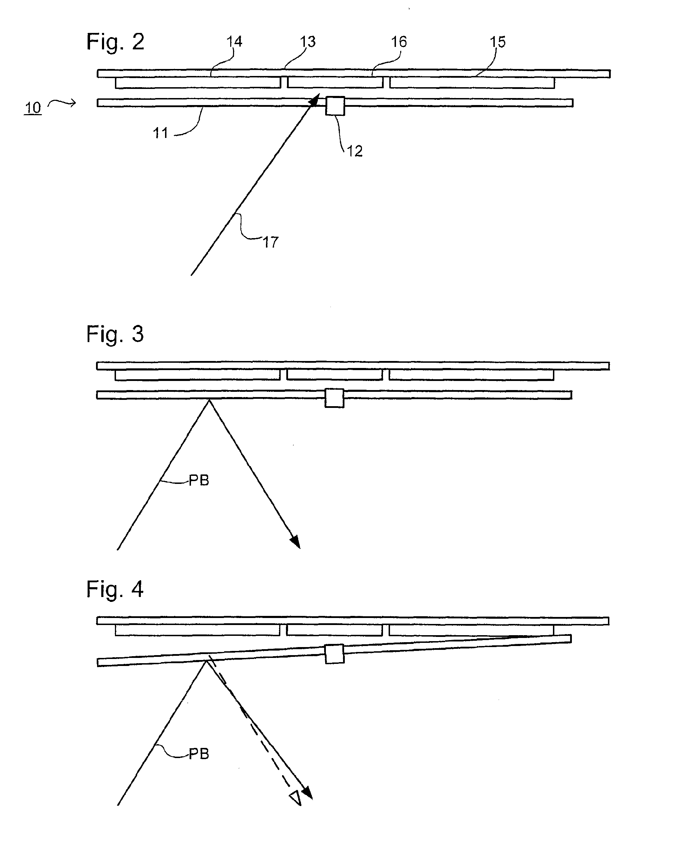

Figures 2 and 3 depicts an element of a spatial light modulator of the first embodiment of the invention in the exposure phase with the deformable mirror in rest and activated positions;

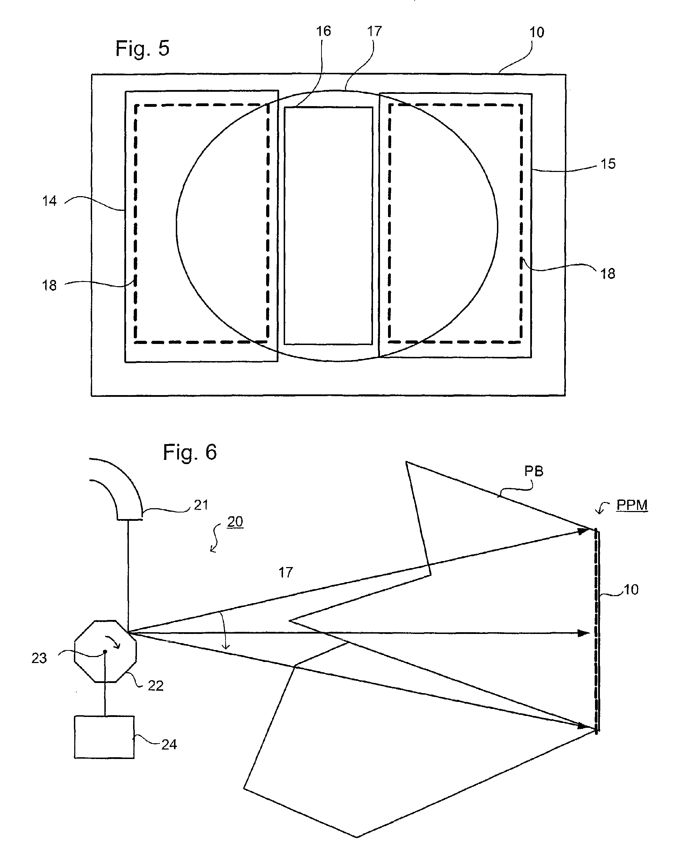

Figure 5 is a plan view of an element of a spatial light modulator of the first embodiment of the invention;

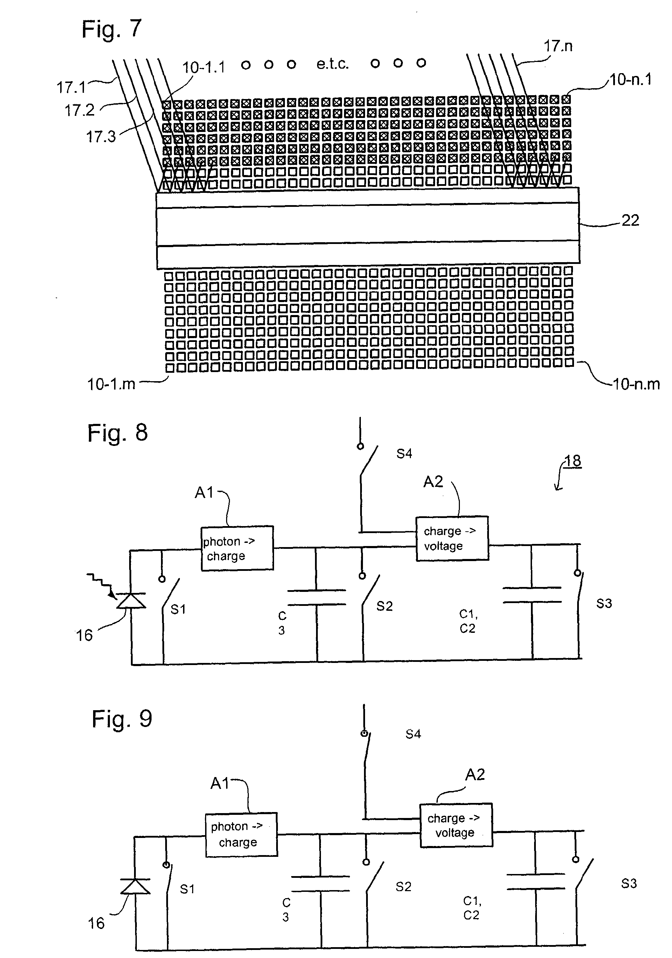

Figures 6 and 7 are side and plan views of a spatial light modulator of the first embodiment of the invention together with a beam scanning mechanism; and

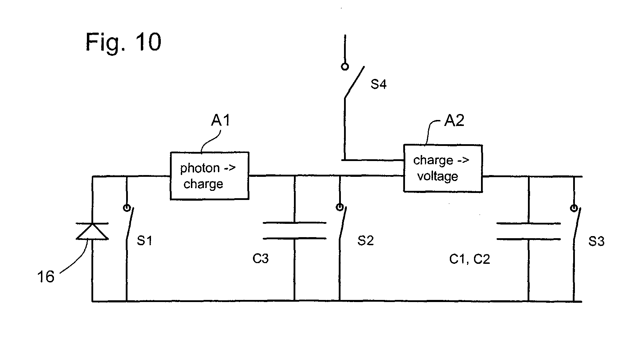

Figures 8 to 10 are diagrams of the control circuit of the spatial light modulator of the first embodiment in various phases of its cycle.

In the Figures, corresponding reference symbols indicate corresponding parts.

### Embodiment 1

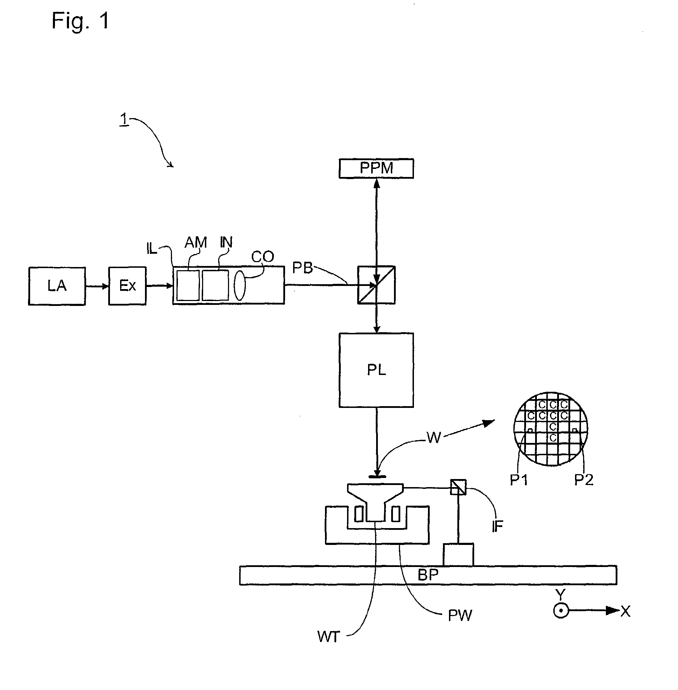

Figure 1 schematically depicts a lithographic projection apparatus according to a particular embodiment of the invention. The apparatus comprises:
- a radiation system Ex, IL, for supplying a projection beam PB of radiation (*e.g.* UV radiation), which in this particular case also comprises a radiation source LA;
- a programmable patterning means PPM (e.g. a programmable mirror array) for applying a pattern to the projection beam; in general the position of the programmable patterning means will be fixed relative to item PL; however it may instead be connected to a positioning means for accurately positioning it with respect to item PL;
- an object table (substrate table) WT provided with a substrate holder for holding a substrate W (*e.g.* a resist-coated silicon wafer), and connected to positioning means for accurately positioning the substrate with respect to item PL;
- a projection system ("lens") PL (*e.g.* a quartz and/or CaF₂ lens system or a catadioptric system comprising lens elements made from such materials, or a mirror system) for projecting the patterned beam onto a target portion C (*e.g.* comprising one or more dies) of the substrate W; the projection system may project an image of the programmable patterning means onto the substrate; alternatively, the projection system may project images of secondary sources for which the elements of the programmable patterning means act as shutters; the projection system may also comprise a micro lens array (known as an MLA), *e.g.* to form the secondary sources and to project microspots onto the substrate.

As here depicted, the apparatus is of a reflective type (*i.e.* has a reflective programmable patterning means). However, in general, it may also be of a transmissive type, for example (*i.e.* with a transmissive programmable patterning means).

The source LA (*e.g.* an excimer laser) produces a beam of radiation. This beam is fed into an illumination system (illuminator) IL, either directly or after having traversed conditioning means, such as a beam expander Ex, for example. The illuminator IL may comprise adjusting means AM for setting the outer and/or inner radial extent (commonly referred to as σ-outer and σ-inner, respectively) of the intensity distribution in the beam. In addition, it will generally comprise various other components, such as an integrator IN and a condenser CO. In this way, the beam PB impinging on the programmable patterning means PPM has a desired uniformity and intensity distribution in its cross-section.

It should be noted with regard to Figure 1 that the source LA may be within the housing of the lithographic projection apparatus (as is often the case when the source LA is a mercury lamp, for example), but that it may also be remote from the lithographic projection apparatus, the radiation beam which it produces being led into the apparatus (e.g. with the aid of suitable directing mirrors); this latter scenario is often the case when the source LA is an excimer laser. The current invention and Claims encompass both of these scenarios.

The beam PB subsequently intercepts the programmable patterning means PPM. Having been reflected by the programmable patterning means PPM, the beam PB passes through the projection system PL, which focuses the beam PB onto a target portion C of the substrate W. With the aid of the positioning means (and interferometric measuring means IF), the substrate table WT can be moved accurately, *e.g.* so as to position different target portions C in the path of the beam PB. Where used, the positioning means for the programmable patterning means can be used to accurately correct the position of the programmable patterning means PPM with respect to the path of the beam PB, *e.g.* during a scan. In general, movement of the object table WT is realized with the aid of a long-stroke module (course positioning) and a short-stroke module (fine positioning), which are not explicitly depicted in Figure 1. A similar system may also be used to position the programmable patterning means. It will be appreciated that the projection beam may alternatively/additionally be moveable while the object table and/or the programmable patterning means may have a fixed position to provide the required relative movement.

Although the lithography apparatus according to the invention is herein described as being for exposing a resist on a substrate, it will be appreciated that the invention is not limited to this use and the apparatus may be used to project a patterned projection beam for use in resistless lithography.

The depicted apparatus can be used in four preferred modes:
1. Step mode: the entire pattern on the programmable patterning means is projected in one go (i.e. a single "flash") onto a target portion C. The substrate table WT is then moved in the x and/or y directions to a different position for a different target portion C to be irradiated by the beam PB.
2. Scan mode: essentially the same as step mode, except that a given target portion C is not exposed in a single "flash". Instead, the programmable patterning means is movable in a given direction (the so-called "scan direction", e.g. the y direction) with a speed v, so that the projection beam PB is caused to scan over the programmable patterning means; concurrently, the substrate table WT is simultaneously moved in the same or opposite direction at a speed V = Mv, in which M is the magnification of the lens PL. In this manner, a relatively large target portion C can be exposed, without having to compromise on resolution.
3. Pulse mode: the programmable patterning means is kept essentially stationary and the entire pattern is projected onto a target portion C of the substrate using a pulsed radiation source. The substrate table WT is moved with an essentially constant speed such that the projection beam PB is caused to scan a line across the substrate W. The pattern on the programmable patterning means is updated as required between pulses of the radiation system and the pulses are timed such that successive target portions C are exposed at the required locations on the substrate. Consequently, the projection beam can scan across the substrate W to expose the complete pattern for a strip of the substrate. The process is repeated until the complete substrate has been exposed line by line.
4. Continuous scan mode: essentially the same as pulse mode except that a substantially constant radiation source is used and the pattern on the programmable patterning means is updated as the projection beam scans across the substrate and exposes it.

Combinations and/or variations on the above described modes of use or entirely different modes of use may also be employed.

Figure 2 shows in cross-section an element (pixel) 10 of the programmable patterning means (spatial light modulator) PPM. Each pixel 10 comprises a mirror 11 pivotable about axle 12, which forms the beam modulating element of the pixel, mounted above a substrate 13. Supports for the axle 12 are omitted from the view for clarity. To control the pivoting of the mirror 11, capacitor plates 14, 15 are provided on the substrate 13, one under each half of the mirror. Corresponding plates (not shown) are provided on the back of the mirror though these may be omitted if the mirror itself is sufficiently conductive. Figures 3 and 4 show the element in rest and activated positions showing that the incident projection beam is reflected in different directions by the rest state and activated mirrors. A suitable spatial filter is used to block radiation reflected by mirrors in one of these two states so that the deformable mirror becomes a switch. More complex arrangements can be used to effect grayscales.

Programming the element 10 is performed by selectively irradiating photodiode 16 with a programming beam 17 to which the mirror 11 is transparent. Where the mirror 11 is made of silicon, an infra-red programming beam may be used as the silicon is transparent to infra-red whilst reflective to the "blue" projection beam, which is of 365nm or less. Any coatings on the mirror to improve reflectivity for the projection beam and any conductive layers to form capacitor plates, are also arranged to be transparent to infra-red. Alternatively, the conductive layers may be provided in the form of grids.

As shown in Figure 5, which is a plan view of the pixel 10, the photodiode 16 can be positioned in the space between the capacitor plates 14, 15. If the pixel is programmed in a short pulse of the programming beam, the footprint of the programming beam 17 can be made larger than the photodiode 16 so that an error in positioning of the programming beam does not affect the amount of charge developed in the photodiode. Alternatively, grayscale programming can be achieved using a smaller beam which scans along the length of the photodiode, with the length of time for which the beam is on determining the charge generated in the photodiode and hence a grayscale value. In this case the footprint of the programming beam 17 is preferably rectangular so that any lateral misplacement of the programming beam does not effect the amount of charge generated.

Control circuitry 18 to amplify the charge signal generated in the photodiode and apply it to the capacitor plates 14, 15 is located in the substrate 13 below the capacitor plates 14, 15. The control circuitry 18 is described further below.

The optical scanning unit 20, for scanning the programming beam 17 across the array of pixels of the spatial light modulator is shown in Figures 6 and 7. A light guide 21, e.g. an optical fiber, guides the modulated projection beam from its source, e.g. a laser diode, and directs it against a prismatic mirror 22. Such mirrors are also referred to as polygon mirrors. The prismatic mirror 22 is driven to rotate about its major axis 23 by motor 24 and as it does so the angle of incidence of the programming beam 17 cycles as each face of the prismatic mirror is presented to the programming beam. The reflected programming beam therefore scans across the pixels 10 of the spatial light modulator PPM, as indicated by the arrows. A collimating lens (not shown) may be provided in the output of the light guide 21 so that the programming beam is sufficiently well collimated that its footprint on pixels at the edges of the spatial light modulator is the same as on pixels in the center. Alternatively, the programming beam may be focused on the spatial light modulator and a so-called fθ lens (not shown) positioned between the prismatic mirror and the spatial light modulator to compensate for the differing path length.

Whilst Figure 6 shows only one programming beam 17, in practice a large number of beam are used, one for each column of pixels 10 in the spatial light modulator PPM. This is shown in Figure 7 which illustrates programming beams 17-1 to 17-n for respectively scanning columns 1 to n of the two-dimensional array of pixels 10-1.1 to 10-n.m. It will be appreciated that since n and m may each be of the order of 1,000 or 4,000, scanning a beam across a whole column provides a significant speed advantage over using a single beam in a raster scan pattern and is a much simpler mechanism than would be required to provide a dedicated programming beam for each pixel. Nevertheless, these alternatives may be useful in some circumstances, especially with smaller programmable patterning means.

A plurality of independently controllable light sources, e.g. laser diodes, are used to provide the corresponding programming beams. The modulation may be a simple binary modulation if the spatial light modulator is a binary device or operating in a binary mode. If grayscaling is desired, the modulation may use multiple intensity levels or pulse width modulation, for example. The light sources can be arranged remotely from the beam scanning unit 20 with light conducted there by optical fibers. The positioning of the light sources is thus not constrained by the dimensions of the spatial light modulator and so they can be arranged as convenient for cooling and to enable easy provision of the modulating signals. For timing purposes the optical path lengths between the different light sources and the prismatic mirror 22 should be approximately the same. Otherwise, it is necessary to individually delay the signals to the light sources electronically, e.g. by cable length.

It will be appreciated that Figure 6 is schematic only and the beam scanning unit will be of a small enough size and suitable position to not obstruct the projection beam.

The lithographic projection apparatus preferably operates in a pulse mode and the modulating elements are set between pulses of the projection beam PB. It should be noted that even if the same pattern is to be imaged in two successive pulses, the modulating elements 11 may need to be reset each pulse because the intensity of the projection beam is sufficiently high that the momentum transfer on reflection and heat absorbed by the modulating mirror disturbs the state of the modulating elements. A phase locked loop is used to synchronize the rotation of the prismatic mirror and the modulation of the programming beams to the trigger pulse for the radiation source. An angular encoder can be used to keep track of the position of the prismatic mirror.

As mentioned above, a simple control circuit is used to set the state of the modulating element of a pixel according to the charge generated in the light sensitive element by the programming beam. This schematic circuit is shown in Figures 8 to 10 which respectively show the receiving, mirror-setting and resetting phases of the cycle carried out by the circuit.

In the receiving phase, see Figure 8, switches S1, S2 and S4 are open so that the current generated in photodiode 16 by the programming beam 17 is amplified by amplifier A1 and stored on storage capacitor C3. Switch S3 is closed to short-circuit and discharge control capacitors C1, C2 which are formed by the capacitor plates 14, 15 and the corresponding electrodes on the mirror 11.

Once the programming beams have scanned all of the pixels of the spatial light modulator, the charge stored in the storage capacitor C3 of each pixel is transferred to the control capacitors C1, C2. To do this, as shown in Figure 9, switch S3 is opened to remove the short-circuit and switch S4 is closed to power amplifier A2. Control capacitors C1, C2 are then charged according to the charge in storage capacitor C3, which in turn was determined by the amount of energy delivered by the programming beam. The mirror 11 then moves to the appropriate position. Not shown in the Figures is an analog inverter or voltage mirror that ensures that one of capacitors C1, C2 is charged to the opposite polarity to the other. Switch S1 can closed during this phase to prevent interference from noise generated in the photodiode.

After the pulse of the projection beam, the pixel is reset by closing switch S3 to discharge control capacitors C1, C2, so that the mirror returns to the rest position, and switch S2 is closed discharge storage capacitor C3. Switches S1 and S2 are then opened ready for the next cycle.

Because all of the control circuits are cycled simultaneously, the same control signals are distributed to switches S1 to S4 in all of the pixels at once. This can be done with a very simple wiring arrangement compared to the complexities required for separate addressing of each pixel. Also, only power rails and four control lines need be provided to the spatial light modulator.

The above arrangement deflects the mirrors from their rest position in only one direction. Where deflection in two directions is required, an analog subtractor or comparator can be included with only a minor increase in complexity, or an additional signal inverter can be used to reverse the polarities.

Whilst specific embodiments of the invention have been described above, it will be appreciated that the invention may be practiced otherwise than as described. For example, the pixels of the spatial light modulator may be programmed from behind if the substrate on which they are disposed is made of a material, e.g. silicon, which is sufficiently transparent to the programming beam, e.g. infra-red. Programming from the backside provides greater freedom to design the beam scanning unit and makes it easier to position and align the prismatic mirror. Also, by using double-sided fabrication techniques and conductors through the thickness of the substrate, the light sensitive element can be positioned on the rear surface of the substrate. This enables the light sensitive element to be made larger, allowing use of a programming beam of lower power. Also, there is greater flexibility in choosing the wavelength of the programming beam since it is no longer constrained by the transparency of the substrate. The description is not intended to limit the invention.

## Claims

1. A spatial light modulator comprising an array of pixels disposed on a substrate, each pixel comprising:
a light modulating element for modulating an incident radiation beam of a first wavelength;
a light sensitive element for receiving a programming beam of a second wavelength;
control circuitry for setting the light modulating element according to the signal received by said light sensitive element.

2. A spatial light modulator according to claim 1 wherein said light modulating element and said light sensitive element of each pixel are disposed on the same side of said substrate.

3. A spatial light modulator according to claim 2 wherein said light modulating element is disposed over said light sensitive element and said light modulating element is substantially transparent to radiation of said second wavelength.

4. A spatial light modulator according to claim 2 wherein said substrate is substantially transparent to radiation of said second wavelength.

5. A spatial light modulator according to claim 1 wherein said light modulating element and said light sensitive element of each pixel are disposed on opposite sides of said substrate.

6. A spatial light modulator according to any one of the preceding claims further comprising beam scanning means for scanning at least one programming beam across said array of pixels.

7. A spatial light modulator according to claim 6 wherein said array of pixels is a two dimensional array having a plurality of rows and a plurality of columns and said beam scanning means is adapted to scan a plurality of programming beams equal in number to said plurality of columns along respective ones of said columns.

8. A spatial light modulator according to claim 7 wherein said beam scanning means comprises a prism having reflective surfaces and disposed with its axis perpendicular to said columns and means for rotating said prism about said axis.

9. A spatial light modulator according to claim 7 or 8 wherein said beam scanning means comprises a plurality of independently controllable light sources corresponding in number to said plurality of beams.

10. A spatial light modulator according to any one of the preceding claims wherein said light sensitive element comprises a photodiode and said control circuitry comprises a capacitor connected to said photodiode so as to be charged by current generated in said photodiode by said programming beam when incident thereon.

11. A spatial light modulator according to claim 10 wherein said control circuitry further comprises an amplifier for amplifying the current generated in said photodiode.

12. A spatial light modulator according to any one of the preceding claims wherein said light modulating element comprises a deformable mirror.

13. A method of spatially modulating a radiation beam according to a pattern using a spatial light modulator comprising an array of pixels disposed on a substrate, each pixel comprising:
a light modulating element for modulating an incident radiation beam of a first wavelength;
a light sensitive element for receiving a programming beam of a second wavelength;
control circuitry for setting the light modulating element according to the signal received by said light sensitive element;
said method comprising the steps of:
modulating at least one programming beam according to said pattern;
scanning the or each programming beam across said array in synchronism with the modulation of the or each beam so as to irradiate each light sensitive element and thereby set the state of the corresponding light modulating element; and
directing a radiation beam onto said spatial light modulator so as to be modulated according to the states of said light modulation elements.

14. A method according to claim 13 wherein said radiation beam is pulsed and said steps of modulating and scanning are carried out between pulses of said radiation beam.

15. A lithographic projection apparatus comprising:
- a radiation system for providing a projection beam of radiation;
- programmable patterning means for patterning the projection beam according to a desired pattern;
- a substrate table for holding a substrate;
- a projection system for projecting the patterned beam onto a target portion of the substrate,
**characterized in that** said programmable patterning means comprises a spatial light modulator according to any one of claims 1 to 12.

16. A device manufacturing method comprising the steps of:
- providing a substrate that is at least partially covered by a layer of radiation sensitive material;
- providing a projection beam of radiation using a radiation system;
- patterning the projection beam using a method according to claim 13 or 14;
- projecting the patterned beam of radiation onto a target portion of the layer of radiation-sensitive material.
